# EUROPEAN PATENT SPECIFICATION

(11) **EP 0 571 345 B1**
(45) Date of publication and mention of the grant of the patent: **12.08.1998**
(21) Application number: 93850051.9
(22) Date of filing: 22.03.1993
(51) Int. Cl.: H04M 3/00

(54) **Centralised telefax reception**
Zentralisierter Telefax-Empfang
Réception centrale pour téléfax

(30) Priority: 21.05.1992 SE 9201589
(43) Date of publication of application: 24.11.1993
(73) Proprietor: TELEVERKET, 123 86 Farsta (SE)
(72) Inventor: Krister, Svartsjö, S-132 42 Saltsjö-Boo (SE)
(74) Representative: Karlsson, Berne

(56) References cited:
- DE-A- 3 244 807
- US-A- 4 994 926
- US-A- 5 091 790

## Description

The invention relates to centralised telefax reception apparatus for location in a telephone exchange.

In a telephone exchange installation, incoming lines are arranged for receiving calls from parties external to the exchange installation. By exchange installation is meant any telecommunications switch, including a PABX, which has the capacity to receive, from a plurality of callers, and to distribute, to a plurality of subscribers, calls. Within the exchange, there is a number of connections arranged for receiving calls from incoming lines, or from internal lines, connected to own exchange extensions. In the transmission of fax messages, a fax receiver is required for each subscriber unit which is required to have the capability to receive fax messages.

The requirement that every subscriber unit capable of receiving fax messages has a fax receiver means that the number of fax receivers connected to a given exchange installation can become quite significant. In certain cases it is clearly desirable to arrange for the central reception and handling of fax messages. However, in many prior art central fax reception arrangements a fax receiver is still required for each line allocated to receive fax messages. This requires installation of a plurality offax receivers. It is apparent that such a solution is costly and the need to maintain a plurality of independent fax receivers does not permit an efficient use of available resources.

In US Patent 4,994,926 there is disclosed a fax store and forward system. This system provides fax reception for a number of subscribers and has a plurality of subscriber numbers assigned to fax reception. This document discloses a message receiving unit, or system, and includes means for forwarding and distributing incoming fax calls to the correct subscriber.

Using a central telefax service has the disadvantage that the telefax centre must identify the addressee of every incoming message by reading the message. This procedure is not efficient where relatively large quantities of information are handled. It is thus desirable to develop arrangements for central telefax handling, which, automatically identify the addressee of incoming fax messages. Such a system also needs to transfer incoming messages to the addressee, using whatever equipment is available to the addressee, e.g. a computer (PC), printer, fax receiver etc.

The present invention provides a solution to these problems.

In an exchange installation, which may be a PABX or the like, it is possible to arrange for the central handling of incoming fax messages, by providing a unit for the reception of incoming calls. The receiving unit has a plurality of reception numbers allocated to it, each number corresponding to a subscriber connected to the exchange who is permitted to receive fax messages. None of the reception numbers are directly connected to receiving equipment, such as a telephone, telefax receiver etc.. This arrangement provides a pool of extensions which can be used by users of the system.

A person who subscribes to the service is allocated a subscriber number in the pool. Furthermore, the receiving unit is provided with a message forwarding arrangement, so that an incoming call to the receiving unit is automatically forwarded to a predetermined receiving point. The receiving point is allocated one or more equipments for serving incoming calls. The addressee for a message is identified, in the receiving unit, from the called number, which information is transferred to a message receiving system. With the aid of information relating to the called number, the message receiving system identifies the addressee and the type of equipment available to receive the incoming message. This process of identification can, advantageously, be carried out automatically by comparing the called number with information held in a look-up table, stored in the message receiving system which correlates called numbers with subscriber addressees and available receiving equipment. Transfer of a message to the designated receiving equipment then takes place, e.g. the message may be transferred to a personal computer (PC), printer, telefax receiver, or the like.

The message receiving system is connected to a number of subscriber/extension lines. A call is directed by the exchange/station to the first idle line. Information on the original called number is transferred to the fax receiving system by the exchange/station via a selected line. The receiving system receives this information and registers the original called number. After the appropriate handshake procedures are completed, between the receiving system and the calling transmitter, the receiving system receives the message. Depending on how the message is to be transferred to the intended addressee, the message is stored as a paper copy, in a computer memory etc.. The message receiving system then transfers the message to the intended addressee. The transfer may be effected via a local area network (LAN), public switched telephone network, or by some other means. If the receiver is not within the area served by the automatic message transfer system, the system ensures that the message is transferred by other suitable channels.

If messages, for a particular addressee, must be treated in accordance with a pre-requested routine, the necessary information can be stored in the look-up table referred to above and this information can be used to drive the message receiving system. Such routines might provide, for example, special procedures for handling secret or confidential information, or special procedures for distribution of received messages.

According to a first aspect of the present invention, there is provided an apparatus, in a telephone system, for providing centralised telefax message reception for a plurality of subscribers (8), each having a subscriber location at which subscriber equipment is located, said apparatus being adapted to interwork with, and between, a multiplicity of different types of subscriber equipment, said telephone system having a receiving unit associated with a plurality of subscriber numbers (2) assigned to reception of fax messages, each number of said plurality being identified with a single subscriber, the apparatus including a message receiving system (5, 12) adapted to receiving incoming fax messages addressed to anyone of said plurality of subscriber numbers and to distribute incoming messages to a subscriber to whom they are addressed, characterised in that the message receiving system (5, 12) includes a plurality of input lines (5) and a fax server (12) having a memory, in which is stored a look-up table identifying the subscriber equipment available at each subscribcr location, and means to translate incoming messages into a data format capable of reception by the subscriber equipment (9, 11) available at a given subscriber location.

Messages transferred by the receiving unit to the message receiving system (5, 12) may include a data segment identifying a called subscriber number.

In use, a first idle line, of said plurality of input lines (5), may be selected for an incoming message from the receiving unit, said message including an identity for a called subscriber.

In use, an incoming message may be transferred from the message receiving system (5, 12) to a subscriber (9), to whom the incoming message is addressed, over a local area data network (6).

Subscriber equipment (9, 11) to which said fax server is connected, may include fax receivers (11), personal computers (9), printers and recorders.

The message receiving system (5, 12) may include means for recording incoming fax messages together with a number identifying subscribers to whom incoming fax messages are addressed.

Said fax server (12) may include means for storing an incoming fax message until an authorised user requests transmission of said fax message to a subscriber apparatus and said fax server may have means for requesting and authenticating a user PIN number.

Said look-up table may include information on methods to be used for the distribution of messages addressed to subscribers.

Said message receiving system (5, 12) may include means for rerouting an incoming fax message to a remote terminal connected to the PSTN.

According to a second aspect of the present invention, there is provided a PABX, characterised in that it includes apparatus as set forth in any preceding paragraph.

According to a third aspect of the present invention, there is provided a PSTN telephone exchange, characterised in that it includes apparatus as set forth in any preceding paragraph.

The present invention reduces the number of telefax equipments that must be procured by an organisation, and enables units which do not normally receive fax to be utilised as telefax message receivers, e.g. printers, PCS, and the like.

For the personnel of a telefax centre, the work of identifying the addressees of received messages is reduced, because the system does this automatically. The present invention also facilitates the handling of messages according to different security classifications in a satisfactory manner.

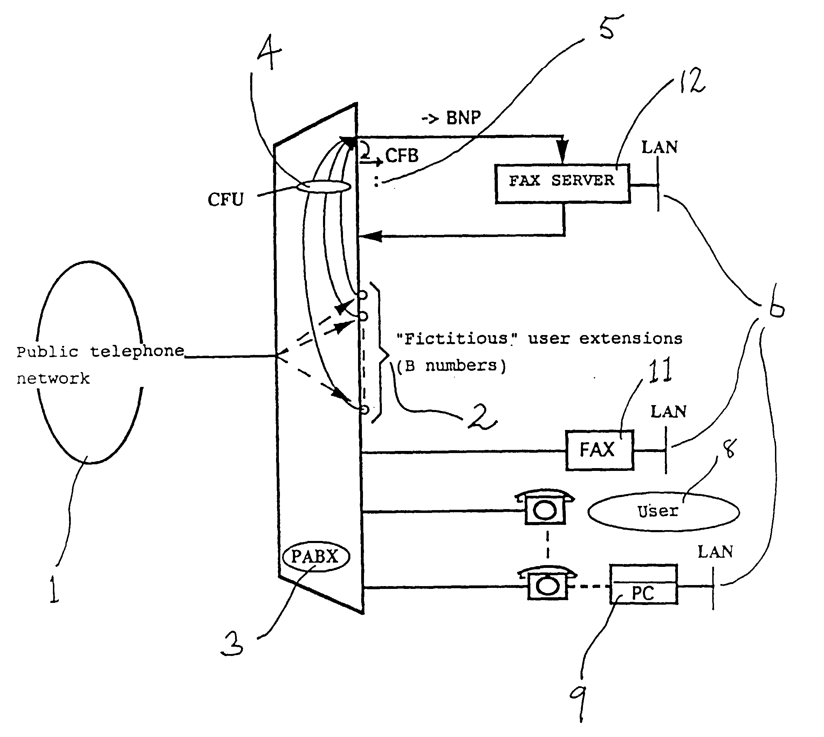

An embodiment of the invention will now be described by way of example with reference to the accompanying drawing which shows, in diagrammatic form, a centralised fax message receiving system, according to the present invention.

A call, originating on the public switched telephone network (PSTN), 1, is received by one of a number of the fictitious user extensions, B numbers, 2, from where it is forwarded via a call forward unit, (CFU), 4, to the inputs, 5, of the telefax message receiving system, 12, which, in this embodiment, is referred to as a fax server. Calls are automatically received on an extension line which is idle. The idle line selected, in the drawing, is identified as line CFB. A local area network, or public switched network or the like, here designated as LAN, 6, is used for the distribution of incoming messages to subscribers. Individual receivers of information may have fax receiving equipment, 11, PCS, 9, or telephones.

The invention will now be described with reference to its operation in an office PABX, 3, connected to the PSTN, I. Telefax messages are transferred from a calling party in the PSTN, 1, to the addressee's B number, 2, in the PABX, 3

The calling party in the PSTN, 1, calls the addressee in the normal way, by sending out digit information, i.e. dialling a telephone number. The digit information is identified by the PSTN which prepares the interconnection of called and calling parties. The called party is notified of the incoming call, from the calling party, in the usual way, by transmission of ringing tone, or an equivalent signal. In the present case, the call is made to an office PABX, 3. In the PABX, the call is directed to the fictitious extension numbers, B numbers, 2. The direction of the call to numbers, 2, may be effected either by a telephonist, or by direct dialling, that is to say the PSTN transfers the necessary routing information to the PABX which automatically arranges the connection to the B numbers, or by some other established interconnection method.

The incoming call is thus directed to the B numbers. These fictitious numbers only occupy space in the PABX number range. They do not have telephone sets, or other subscriber reception equipment, connected to them.

Incoming calls to the B numbers, 2, are automatically redirected to the fax server, 12, which answers the calls. The identity of the B number called, BNP, is transferred to the fax server, 12, when the call is transferred. The fax server receives this information and notes the identity ofthe addressee to which the call is addressed. The fax server has a plurality of lines for answering calls, and the called party is identified regardless of which of these lines actually receives the call.

After the necessary identifications, the fax server receives the message transmitted by the calling party. The message is subsequently transferred to the receiving party. The receiving party may be connected to the PABX, 3, or may be at a remote geographical location. The latter situation can arise, for example, when the called party is a person who is on a business trip, or temporarily on duty at another location. Where messages are to be transferred to a remote location, transfer is effected by means of the PSTN, a data network, or the like. Internally, the transfer is preferably carried out via an internal network, or LAN, 6. The information transmitted over the LAN, 6, may be received by a fax equipment, recorder, PC, printer etc.. The type of equipment available at a particular location can be recorded in a suitable look-up table, and once the type of equipment available to receive the message has been identified the data format of the message to be transmitted can, if necessary, be translated into a suitable format for the equipment available to receive it. This facility to receive fax messages on a variety of equipment, enables a reduction in the cost of procuring fax receivers. This saving is effected by the replacement of several fax machines with a single recorder of suitable design, and by using a single fax machine to transmit out going messages. Such devices may be positioned at suitable locations within the area served by the PABX.

Alternatively, it is possible for the receiving party to call the fax server, 12, in order to retrieve any messages that have been received, for him, by the fax server, 12. In this case, the fax server identifies the calling party before message transfer is permitted. Many techniques are known for the secure identification of a calling party, including the use of personal identity numbers, or PINs. Such procedures are normally used only in those cases where access to incoming messages is limited to a particular person.

In the fax server, 12, the messages are stored in a suitable memory function provided for this purpose. There are, of course, no reasons why a message should not be retrieved directly in a readable form, e.g. on paper, data screens, or the like.

## Claims

1. Apparatus, in a telephone system, for providing centralised telefax message reception for a plurality of subscribers (8), each having a subscriber location at which subscriber equipment is located, said apparatus being adapted to interwork with, and between, a multiplicity of different types of subscriber equipment, said telephone system having a receiving unit associated with a plurality of subscriber numbers (2) assigned to reception of fax messages, each number of said plurality being identified with a single subscriber, the apparatus including a message receiving system (5, 12) adapted to receiving incoming fax messages addressed to anyone of said plurality of subscriber numbers and to distribute incoming messages to a subscriber to whom they are addressed, characterised in that the message receiving system (5, 12) includes a plurality of input lines (5) and a fax server (12) having a memory, in which is stored a look-up table identifying the subscriber equipment available at each subscriber location, and means to translate incoming messages into a data format capable of reception by the subscriber equipment (9, 11) available at a given subscriber location.

2. Apparatus, as claimed in claim 1, characterised in that messages transferred by the receiving unit to the message receiving system (5, 12) include a data segment identifying a called subscriber number.

3. Apparatus, as claimed in claim 1, or 2, characterised in that, in use, a first idle line, of said plurality of input lines (5), is selected for an incoming message from the receiving unit, said message including an identity for a called subscriber.

4. Apparatus, as claimed in any preceding claim, characterised in that, in use, an incoming message is transferred from the message receiving system (5, 12) to a subscriber (9), to whom the incoming message is addressed, over a local area data network (6).

5. Apparatus, as claimed in claim 4, characterised in that subscriber equipment (9, 11) to which said fax server is connected includes fax receivers (11), personal computers (9), printers and recorders.

6. Apparatus, as claimed in any preceding claim, characterised in that the message receiving system (5, 12) includes means for recording incoming fax messages together with a number identifying subscribers to whom incoming fax messages are addressed.

7. Apparatus, as claimed in any preceding claim, characterised in that said fax server (12) includes means for storing an incoming fax message until an authorised user requests transmission of said fax message to a subscriber apparatus, said fax server having means for requesting and authenticating a user PIN number.

8. Apparatus, as claimed in any preceding claim, characterised in that said look-up table includes information on methods to be used for the distribution of messages addressed to subscribers.

9. Apparatus, as claimed in any preceding claim, characterised in that said message receiving system (5, 12) includes means for rerouting an incoming fax message to a remote terminal connected to the PSTN.

10. A PABX, characterised in that it includes apparatus as claimed in any preceding claim.

11. A PSTN telephone exchange, characterised in that it includes apparatus as claimed in any of claims 1 to 9.

## Patentansprüche

1. Vorrichtung in einem Telefonsystem zum Schaffen von zentralisiertem Telefaxmeldungsempfang für eine Vielzahl von Teilnehmern (8), von denen jeder einen Teilnehmerort hat, an dem Teilnehmerausrüstung angeordnet ist, welche Vorrichtung dazu ausgebildet ist, zusammen mit und zwischen einer Vielzahl von unterschiedlichen Typen von Teilnehmerausrüstung zu arbeiten, wobei das Telefonsystem eine Empfangseinheit aufweist, der eine Vielzahl von Teilnehmernummern (2) zugeordnet ist, die zum Empfangen von Faxmeldungen zugeordnet sind, wobei jede Nummer der Vielzahl mit einem einzigen Teilnehmer identifiziert ist, welche Vorrichtung ein Meldungsempfangssystem (5, 12) einschließt, das zum Empfangen von eingehenden Faxmeldungen ausgebildet ist, die an irgendeine der Vielzahl von Teilnehmernummern adressiert sind, und um eingehende Meldungen an einen Teilnehmer zu verteilen, an den sie adressiert sind, dadurch gekennzeichnet, daß das Meldungsempfangssystem (5, 12) eine Vielzahl von Eingangsleitungen (5) und einen Faxserver (12) mit einem Speicher, in dem eine Nachschlagtabelle gespeichert ist, die die Teilnehmerausrüstung identifiziert, die an jedem Teilnehmerort zur Verfügung steht, und Mittel zum Übersetzen eingehender Meldungen in ein Datenformat aufweist, das durch die Teilnehmerausrüstung (9, 11), die an einem gegebenen Teilnehmerort zur Verfügung steht, empfangen werden kann.

2. Vorrichtung nach Anspruch 1, dadurch gekennzeichnet, daß Meldungen, die durch die Empfangseinheit zum Meldungsempfangssystem (5, 12) übertragen werden, ein Datensegment einschließen, das eine gerufene Teilnehmernummer identifiziert.

3. Vorrichtung nach Anspruch 1 oder 2, dadurch gekennzeichnet, daß bei der Benutzung eine erste freie Leitung der Vielzahl von Eingangsleitungen (5) für eine eingehende Meldung von der Empfangseinheit ausgewählt wird, wobei die Meldung eine Identität für einen gerufenen Teilnehmer einschließt.

4. Vorrichtung nach einem vorangehenden Anspruch, dadurch gekennzeichnet, daß bei der Benutzung eine eingehende Meldung von dem Meldungsempfangssystem (5, 12) zu einem Teilnehmer (9), an den die einkommende Meldung adressiert ist, über ein lokales Datennetzwerk (6) übertragen wird.

5. Vorrichtung nach Anspruch 4, dadurch gekennzeichnet, daß die Teilnehmerausrüstung (9, 11), mit der der Faxserver verbunden ist, Faxempfänger (11), Personal-Computer (9), Drucker und Aufzeichnungsgeräte einschließt.

6. Vorrichtung nach einem vorangehenden Anspruch, dadurch gekennzeichnet, daß das Meldungsempfangssystem (5, 12) Mittel zum Aufzeichnen von eingehenden Faxmeldungen zusammen mit einer Nummer aufweist, die Teilnehmer identifiziert, an die eingehende Faxmeldungen adressiert sind.

7. Vorrichtung nach einem vorangehenden Anspruch, dadurch gekennzeichnet, daß der Faxserver (12) Mittel zum Speichern einer eingehenden Faxmeldung aufweist, bis ein autorisierter Benutzer Übertragung der Faxmeldung zu einem Teilnehmergerät verlangt, wobei der Faxserver Mittel zum Anfordern und Authentisieren einer PIN-Nummer des Benutzers aufweist.

8. Vorrichtung nach einem vorangehenden Anspruch, dadurch gekennzeichnet, daß die Nachschlagtabelle Information über Verfahren aufweist, die für die Verteilung von Meldungen verwendet werden sollen, die an Teilnehmer adressiert sind.

9. Vorrichtung nach einem vorangehenden Anspruch, dadurch gekennzeichnet, daß das Meldungsempfangssystem (5, 12) Mittel zum Umleiten einer empfangenen Faxmeldung an einen entfernten Anschluß aufweist, der mit dem öffentlichen Telefonvermittlungsnetzwerk verbunden ist.

10. Privates Nebenstellennetzwerk, dadurch gekennzeichnet, daß es eine Vorrichtung nach einem vorangehenden Anspruch aufweist.

11. Öffentliches Telefonvermittlungsnetzwerk, dadurch gekennzeichnet, daß es eine Vorrichtung nach einem der Ansprüche 1 bis 9 aufweist.

## Revendications

1. Appareil dans un système téléphonique,pour effectuer la réception centralisée de messages de télécopie pour une pluralité d'abonnés (8), ayant chacun une adresse d'abonné à laquelle se trouve un équipement d'abonné, ledit appareil étant prévu pour coopération avec et entre une pluralité de types différents d'équipement d'abonné, ledit système téléphonique comprenant une unité de réception associée à une pluralité de numéros d'abonné (2) affectés à la réception des messages de télécopie, chaque numéro de ladite pluralité étant identifié avec un abonné unique, l'appareil comprenant un système de réception de message (5,12) prévu pour recevoir les messages de télécopie entrants adressés à un quelconque de ladite pluralité de numéros d'abonné et distribuer les messages entrants à un abonné à qui ils sont adressés, caractérisé en ce que le système de réception de message (5,12) comprend une pluralité de lignes d'entrée (5) et un serveur de télécopie (12) comportant une mémoire, dans laquelle est stockée une table de consultation identifiant l'équipement d'abonné disponible à chaque adresse d'abonné, et des moyens de traduction des messages entrants en un format de données pouvant être reçu par l'équipement d'abonné (9,11) disponible à une adresse d'abonné donné.

2. Appareil suivant la revendication 1, caractérisé en ce que les messages transférés par l'unité de réception au système de réception de message (5,12) comprennent un segment de données identifiant un numéro d'abonné appelé.

3. Appareil suivant la revendication 1 ou 2, caractérisé en ce que, en utilisation, une première ligne libre de ladite pluralité de lignes d'entrée (5) est choisie pour un message entrant en provenance de l'unité de réception, ledit message incluant une identité d'un abonné appelé.

4. Appareil suivant une quelconque des revendications précédentes, caractérisé en ce que, en utilisation , un message entrant est transféré du système de réception de message (5,12) à un abonné (9), à qui le message entrant est adressé, sur un réseau local de données (6).

5. Appareil suivant la revendication 4, caractérisé en ce que l'équipement d'abonné (9,11) auquel ledit serveur de télécopie est connecté comprend des récepteurs de télécopie (11), des ordinateurs personnels (9), des imprimantes et des enregistreurs.

6. Appareil suivant une quelconque des revendications précédentes, caractérisé en ce que le système de réception de message (5,12) comprend des moyens d'enregistrement des messages de télécopie entrants ainsi que d'un numéro identifiant les abonnés auxquels les messages de télécopie entrants sont adressés.

7. Appareil suivant une quelconque des revendications précédentes, caractérisé en ce que ledit serveur de télécopie (12) comprend des moyens de stockage d'un message de télécopie entrant, jusqu'à ce qu'un utilisateur autorisé demande la transmission dudit message de télécopie à un appareil d'abonné, ledit serveur de télécopie comprenant des moyens de demande et d'authentification d'un numéro personnel d'identité de l'utilisateur (PIN).

8. Appareil suivant une quelconque des revendications précédentes, caractérisé en ce que ladite table de consultation contient des informations sur les procédures à utiliser pour la distribution des messages adressés à des abonnés.

9. Appareil suivant une quelconque des revendications précédentes, caractérisé en ce que ledit système de réception de message (5,12) comprend des moyens pour réacheminer un message de télécopie entrant vers un terminal distant connecté au réseau téléphonique commuté public (PSTN).

10. PABX, caractérisé en ce qu'il comprend un appareil suivant une quelconque des revendications précédentes.

11. Commutateur téléphonique de PSTN, caractérisé en ce qu'il comprend un appareil suivant une quelconque des revendications 1 à 9.
